# EUROPEAN PATENT APPLICATION

(11) **EP 1 252 828 A2**
(43) Date of publication of application: **30.10.2002**
(21) Application number: 02006666.8
(22) Date of filing: 26.03.2002
(51) Int. Cl.: A23P 1/04, A23L 1/22, A21D 13/08

(54) **Coating agent and coated powder**

(30) Priority: 26.04.2001 JP 2001129849
(71) Applicant: Takasago International Corporation, Tokyo 144-8721 (JP)
(72) Inventor: Goto, Yukio, Takasago International Corporation, Hiratsuka-shi, Kanagawa 254-0073 (JP); Tanaka, Shigeru, Takasago International Corp., Hiratsuka-shi, Kanagawa 254-0073 (JP); Ishii, Hiroshi, Takasago International Corporation, Hiratsuka-shi, Kanagawa 254-0073 (JP)
(74) Representative: Reinhard - Skuhra - Weise & Partner

(57) **Abstract**

A lipid which are solid at ordinary temperature and an edible water-soluble additive and/or an edible polymer substance are dissolved in a solvent to give a single phase solution, or the above-described lipid in a molten state is mixed and emulsified together with an aqueous solution of an edible water-soluble additive and/or an edible polymer substance to give an emulsion. By using the solution or emulsion thus obtained as a coating, the whole surface of a core material such as a powdered flavor is coated. The coated powder is less hygroscopic, have a high storage stability and a high oxidation stability, are excellent in the release of core materials, controlled release and taste and can be favorably used for imparting or enhancing aroma and flavor in foods and drinks to be processed by heating, for example, foods for microwave cooking and baked foods.

## Description

### FIELD OF THE INVENTION

This invention relates to coated powders which can be favorably used in various foods and drinks for imparting or enhancing aroma and flavor, in particular, foods and drinks to be processed by heating (e.g., foods for microwave cooking and baked foods), soups and chewing gums; coating agents which are used in producing these coated powders; a process for producing the coated powders with the use of these coating agents; and foods and drinks containing the above-described coated powders.

### BACKGROUND OF THE INVENTION

Various substances such as flavors, souring agents, sweeteners, seasonings, vitamins, coloring agents, spices, and functional substances are added to various foods and drinks in order to improve the preference or from a nutritional or functional viewpoint. To achieve controlled and efficient release, convenience in handling, improved stability of additives to heat, oxygen or light, etc., it has been a common practice to enlarge the grains of these additives, which may be in the form of powders or crystals, or to granulate these additives by using solutions of natural gums (e.g., acacia gum), solutions of proteins (e.g., gelatin) or solutions of processed starch (e.g., dextrin) as a carrier followed by coating the grains with hydrogenated animal or vegetable fats or lipids which are solid at ordinary temperature. In case of adding these powdered food additives to foods, drinks or the like, there arise troubles caused by the powders during storage, for example, moisture absorption, caking, vaporization of components, deterioration of components, color change or discoloration, thereby worsening the commercial value. In case of adding a powdered flavor to a water-containing food to be heated to a high temperature, in particular, there arises a problem that the flavor is vaporized from the powder after heating and thus the aroma is weakened, or the flavor composition components are partly vaporized and thus the inherent aroma is lost, thereby seriously damaging the commercial value of the product. Thus, there have been proposed some methods for solving these problems.

Examples of the proposed methods for solving the problems are as follows. JP-B-45-12600 discloses a method for producing a double-coated powdered flavor by emulsifying an oily flavor together with a solution of a natural gum such as acacia gum or a solution of a processed starch such as dextrin, spray-drying the resultant emulsion to give a powdered flavor, blending the powdered flavor in a molten state with a hydrogenated animal or vegetable oil which is solid at ordinary temperature or a synthetic fat and then powdering the mixture by spray cooling. JP-A-49-92242 discloses a method for producing a double-coated powdery powder by emulsifying a flavor oil with the use of an aqueous solution of a protein such as gelatin or a polysaccharide such as acacia gum, treating the resultant emulsion with a hydrogenated animal or vegetable oil, a wax and a resin to give a complex emulsion and then spray cooling it. JP-A-1-144948 (U.S. Patent No. 4,803,082) discloses a method wherein a dry flavor composition is carried on sucrose, etc. by spray drying and then coated with a homogeneous mixture of a sweetner such as thaumatin or monellin, a wax and a fat. JP-A-4-152857 discloses a method of producing a coated powdered flavor by emulsifying a flavor in the presence of an aqueous solution of a water-soluble wall material and a compound capable of forming a gel together with a polyvalent metal cation, spray-drying the resultant emulsion to give a powdered flavor (A), dispersing this powdered flavor in an aqueous solution of a polyvalent metal salt to form a gel coating, dissolving the water-soluble wall material therein, spray-drying the resultant solution to give a powdered flavor (B), blending this powdered flavor (B) with a hydrogenated animal or vegetable oil in a molten state, and then powdering the resultant blend. JP-A-7-313092 discloses a method of producing a coated powdered flavor by uniformly coating a flavor compound which is solid at ordinary temperature and/or a powdered flavor with a lipid powder having a melting point of 40°C or above which is employed as a coating agent.

### SUMMARY OF THE INVENTION

As described above, attempts have been made to coat core materials by using coating agents such as hydrogenated fats, waxes and resins and thus coated powders suffering from little moisture absorption, vaporization or changes of components and being highly stable can be obtained thereby. However, these coated powders are still insufficient in the residual aroma of the aroma components after heating food products containing these coated powders, the release of aroma components from core materials at taking and the taste originating in the coating agents. Therefore, further improvement has been required.

Accordingly, an object of the present invention is to provide coated powders free from the above-described problems occurring in the related art, coating agents to be used for producing these coated powders, a process for producing these coated powders and foods and drinks containing the above-described coated powders.

More particularly, the invention aims at providing coated powders which are less hygroscopic, have a high storage stability and a high oxidation stability, are excellent in the release of core materials, controlled release and taste and can be favorably used for imparting or enhancing aroma and flavor in foods and drinks to be processed by heating, for example, foods for microwave cooking and baked foods; coating agents to be used for producing these coated powders; a process for producing the coated powders; and foods and drinks containing the above-described coated powders.

To solve the above-described problems, the inventors have conducted intensive studies and consequently found out that the above-described problems can be solved by, in case of coating a core material which is solid at ordinary temperature with a coating agent, using a blend of a lipid which is solid at ordinary temperature with an edible water-soluble additive and/or an edible polymer substance as the coating agent, thereby completing the invention.

Accordingly, the invention provides a coating agent comprising (a) a lipid which is solid at ordinary temperature and (b) an edible water-soluble additive and/or an edible polymer substance.

The invention further provides a coated powder which comprises a core material which is solid at ordinary temperature having been coated with a coating agent containing (a) a lipid which is solid at ordinary temperature and (b) an edible water-soluble additive and/or an edible polymer substance.

The invention further provides a process for producing a coated powder which comprises dissolving (a) a lipid which is solid at ordinary temperature, and (b) an edible water-soluble additive and/or an edible polymer substance in a solvent to give a single phase solution, or emulsifying and mixing the above-described lipid in a molten state with an aqueous solution of the edible water-soluble additive and/or the edible polymer substance to give an emulsion, and then coating the whole surface of a core material with the use of the solution or emulsion thus obtained as a coating agent.

The invention furthermore provides a food and a drink which comprises the above-described coated powder.

### DETAILED DESCRIPTIN OF THE INVENTION

Now, the invention will be described in greater detail.

The term "solid at ordinary temperature" as used in this specification means that the melting point is about 15°C or higher, preferably about 20°C or higher, more preferably about 25°C or higher, and most preferably about 30°C or higher. The term "edible" as used in this specification means that the substance is acceptable as a food, a drink, an additive for a food or a drink, or the like.

The core material to be coated with a coating agent in the invention is a material which is solid at ordinary temperature. Coating with the coating agent according to the invention is particularly effective for a material which should be protected from deterioration caused by moisture absorption, caking, vaporization of components, changes in components, color change, discoloration, etc. and preferably can be quickly released in the presence of water. Examples of such core materials which is solid at ordinary temperature include flavor compositions, coloring materials, souring agents, vitamins, sweeteners, seasonings, spices, functional substances, and the like materials which are solid at ordinary temperature.

The appropriate particle size of such a core material varies depending on the coating method and the type of the core material and is not particularly limited. In general, the particle size of the core material ranges from 5 to 6000 µm, preferably from 50 to 800 µm. Either one of these core materials which are solid at ordinary temperature or a mixture of two or more thereof may be used. Next, the flavor compositions, coloring materials, souring agents, vitamins, sweeteners, seasonings, spices and functional substances will be described in detail.

First, examples of the flavor compositions which are solid at ordinary temperature include flavors which are solid at ordinary temperature (menthol, vanillin, ethyl vanillin, cinnamic acid, methyl cinnamate, cinnamic alcohol, camphor, piperonal, maltol, ethyl maltol, d-borneol, methyl N-methylanthranilate, methyl β-naphthyl ketone, etc.) and powdered flavors produced by powdering flavors commonly employed as food flavors.

Examples of the flavors commonly employed as food flavors include natural flavor materials such as essential oils obtained from plant materials by pressing, steam distillation and the like, oleoresins obtained by extracting plant materials with a solvent containing carbon dioxide, filtering off the insoluble matters and then eliminating the solvent, recovered flavors obtained by, in the step of concentrating fruit juice, supplying the aroma components distilled off together with water into a recovery unit and thus recovering as an oil or a thick aqueous solution, extracts obtained by bringing animal or plant materials into contact with various solvents, and thus extracting required aroma components from the materials followed by the elimination of the solvents by distillation and concentration, if needed, isolated flavors obtained by isolating a single compound in a pure form from a mixture, cooking flavors formed by heating food materials, and microbial and enzymatic flavors formed by biochemical reactions with the use of milk materials, lipids, proteins and saccharides as the substrate, and synthetic flavors synthesized chemically such as amyl acetate, benzyl alcohol, coumarin, geraniol, phenyl ethyl alcohol and terpineol. Examples of the natural flavor materials include bonito flake extract, kelp extract, crab extract, oyster extract, beef extract, chicken extract, pork extract, onion extract, carrot extract, orange juice, lemon juice and grape juice. It is also possible to use a combination of two or more of these flavor materials depending on the purpose, etc.

The flavor may be powdered by dissolving and mixing the aimed material in an aqueous solution of, for example, dextrin, starch, a natural gum such as acacia gum, or a protein such as gelatin or casein and then spray-drying. Alternatively, the spray-drying method may be used, wherein an emulsifier commonly employed in food manufacturing (sucrose fatty acid ester, lecithin, polyglycerol fatty acid ester, processed starch, Quillaja saponin, etc.) is added to the above-described liquid mixture to thereby emulsify the aimed material followed by spray-drying; the extrusion molding method wherein the aimed material is added to a sugar solution which is prepared by adding a definite amount of water to one of various sugars (sucrose, maltose, maltodextran, etc.) and sugar alcohols (palatinit, maltitol, etc.) or a mixture of two or more of the same and dissolving by heating to thereby control the sugar concentration or a solution of a mixture of sugar(s) with a protein prepared by the same method, and, after homogeneously stirring, the resultant mixture is molded, dried and powdered; the coacervation method with the use of the phase separation by using gelatin, acacia gum, etc.; the freeze-drying method; the molecular inclusion method; the adsorption method; the solidification/grinding method; and the like. The term a "powdered material" as used hereinafter means a material which has been powdered by such a method as described above.

The coloring materials which are solid at ordinary temperature are not particularly restricted, as long as they are edible. Particular examples thereof include natural coloring materials such as cochineal, gardenia, grape pericarp and monascus color and powdered materials of synthetic coloring materials. It is also possible to use a combination of two or more of these coloring materials depending on the purpose or the like.

Examples of the souring agents which are solid at ordinary temperature include organic acids such as citric acid, fumaric acid, dl-malic acid and ascorbic acid, powdered materials thereof and powdered materials of liquid souring agents. It is also possible to use a combination of two or more of these souring agents depending on the purpose or the like.

Examples of the vitamins which are solid at ordinary temperature include vitamin B₁, vitamin B₂, vitamin B₁₂, vitamin C, vitamin D, vitamin L, vitamin K, vitamin U, lipoic acid, nicotinic acid, salts thereof such as sodium salts and hydrochlorides, derivatives thereof such as acetates, powdered materials obtained therefrom and powdered materials of oily vitamins. It is also possible to use a combination of two or more of these vitamins depending on the purpose or the like.

Examples of the sweeteners which are solid at ordinary temperature include fructose, sucrose, aspartame, palatinose, raffinose, trehalose, erythritol, xylitol, powdered materials thereof and powdered materials of liquid sweeteners. It is also possible to use a combination of two or more of these sweeteners depending on the purpose or the like.

Examples of the seasonings which are solid at ordinary temperature include chemical seasonings such as sodium glutamate and nucleic acid-based seasonings and seasonings extracted from natural food materials or obtained by decomposing the same. Either one of these seasonings or a combination of two or more thereof may be used.

Examples of the spices which are solid at ordinary temperature include spicy spices such as clove, garlic and cinnamon, herb spices such as basil and parsley and seed spices such as cumin and anis. Either one of these spices or a combination of two or more thereof may be used.

Examples of the functional substances which are solid at ordinary temperature include powdered materials of animal and vegetable fats such as fish oils (DHA, etc.), linoleic acid, linolenic acid, lecithin and evening primrose oil, powders of crude drugs such as carrot and aloe, chitosan, royal jelly and propolis. Either one of these functional substances or a combination of two or more thereof may be used.

The coating agent to be used for coating the above-described core material in the invention contains at least (a) a lipid which is solid at ordinary temperature and (b) an edible water-soluble additive and/or an edible polymer substance as the main components.

As the lipid which is solid at ordinary temperature to be used in the coating agent according to the invention, an edible lipid is employed. Examples of lipids preferably used in the invention include waxes such as rice bran wax, carnauba wax, beeswax and whale wax; fats including hydrogenated vegetable oils such as hydrogenated rapeseed oil, hydrogenated soybean oil, hydrogenated sesame oil, hydrogenated rice oil, hydrogenated wheat germ oil, hydrogenated safflower oil, hydrogenated corn oil, hydrogenated sunflower oil, hydrogenated palm oil, hydrogenated palm kernel oil, hydrogenated coconut oil, hydrogenated cotton seed oil, hydrogenated peanut oil and hydrogenated camellia oil, and animal fats or modified oils such as beef tallow, hydrogenated beef tallow, hydrogenated whale oil and hydrogenated fish oil; fatty acid monoglycerides, propylene glycol fatty acid esters, sucrose fatty acid esters, fatty acids, fatty acid salts, higher alcohols, phospholipids, glycolipids, sterols, hydrocarbons, hydrogenated products thereof; and arbitrary mixtures of the above-described lipids.

Examples of the edible water-soluble additive and the edible polymer substance constituting the coating agent according to the invention include monosaccharides such as glucose and fructose, oligosaccharides such as sucrose and lactose, trehalose, natural gums such as acacia gum, locust bean gum, carrageenan and xanthan gum, cellulose derivatives, starch originating in natural materials, glucose, cyclodextrin, maltodextrin, sugar alcohols such as reduced palatinose, maltitol, erythritol and xyltiol, alpha-starch, pectin, glucomannan and proteins such as gluten, casein, gelatin and zein. Either one of these edible water-soluble additives and edible polymer substances or a combination of two or more thereof may be used.

The coating agent to be used for coating the core material in the invention can be prepared by, in case where the lipid which is solid at ordinary temperature and the edible water-soluble additive and/or the edible polymer substance are soluble in common in a solvent, dissolving these components separately in the solvent and then mixing the resultant solutions or dissolving the components together in the solvent to give a single phase solution. As the solvent commonly employed in this step, it is usually preferable from the viewpoint of safety to use ethanol or an aqueous ethanol solution. Preferable examples of the combination of the lipid which is solid at ordinary temperature with the edible water-soluble additive or the edible polymer substance from which a homogeneous coating solution can be prepared by using ethanol or an aqueous ethanol solution as the solvent include sucrose fatty acid ester/methylcellulose, stearic acid/methylcellulose, palmitic acid/methylcellulose, palmitic acid/zein and sucrose ester/granulated sugar. In case where the lipid is insoluble in ethanol, the lipid is liquefied by heating to a temperature higher than its melting point and then the thus molten lipid is mixed with an aqueous solution of the edible water-soluble additive and/or the edible polymer substance heated at a temperature higher than the melting point of the lipid, under stirring to thereby give a homogeneous mixture. In this case, if needed, emulsifiers employed in food manufacturing such as acacia gum, sucrose fatty acid esters, lecithin, polyglycerol fatty acid esters, processed starch or Quillaja saponin may be used. Examples of such combinations include hydrogenated palm oil/gelatin and polyester stearate/pullulan.

The ratio of the edible water-soluble additive and/or the edible polymer substance to the lipid which is solid at ordinary temperature is not strictly limited but can be appropriately varied depending on the stability, release speed, etc. of the core material required for the purpose. In case of using the lipid which is solid at ordinary temperature in a large amount, for example, the hygroscopicity of the coated powder can be regulated, the antioxidative properties thereof can be improved and the release of the core material into water can be controlled to give a sustained release product, which makes it possible to, for example, sustain the aroma over a long time in chewing. In case of using the edible water-soluble additive or the edible polymer substance in a large amount, on the other hand, the heat stability and meltability in water of the coated powder can be improved, which makes it possible to improve the aroma release when a food or a drink containing the coated powder of the invention is put into the mouth. The edible water-soluble additive and/or the edible polymer substance are usually employed in an amount of from about 0.05 to 20 parts by weight, preferably from, for example, about 0.1 to 18 parts by weight per part by weight of the lipid.

Now, a case where the coated powder is added to a chewing gum composition prepared by kneading the materials under heating will be illustrated as an example of using a flavor powder as the core material. The edible water-soluble additive and/or the edible polymer substance are used preferably in an amount of from 0.05 to 14 parts by weight, still preferably from 0.1 to 10 parts by weight, per part by weight of the lipid. By controlling the content to this level, high aroma release can be sustained at the initiation of chewing immediately after putting the gum into the mouth and, at the same time, the aroma can be sustained over a long chewing time. Compared with a case where the core material is coated with the lipid alone, a favorable taste of the coating can be sustained too. In case of foods and drinks to be processed by heating, for example, foods for microwave cooking and baked foods, and soups, it is preferable to use form 0.1 to 18 parts by weight, still preferably from 0.2 to 14 parts by weight, of the edible water-soluble additive and/or the edible polymer substance per part by weight of the lipid. By controlling the content to this level, vaporization of the aroma components can be prevented during storage and heating and thus the desired aroma can be imparted to the cooked foods or drinks. At the same time, a favorable taste of the coating can be obtained. As discussed above, the ratio of the edible water-soluble additive and/or the edible polymer substance to the lipid which is solid at ordinary temperature may be adjusted to the optimum level depending on the components of the core material, the components of the coating agents, the purpose of using the coated powder, the style of using, etc.

The core material may be coated with the coating agent by utilizing a conventional method. For example, the fluidized bed coating method, the centrifugal coating method or the contact/collision coating method may be used.

In the fluidized bed coating method, the core material powder is maintained in a flowable state and coated by spray cooling a liquid coating thereto. Appropriate production conditions may vary depending on the type and particle size of the core material employed, the viscosity of the coating agent and the like. To prevent the coating agent from solidification, it is preferable to maintain the coating agent to be sprayed at a temperature higher than the melting point of the lipid contained therein. To solidify the coating agent adhering to the core material, it is preferable to maintain the chamber at a temperature level lower than the melting point of the lipid contained in the coating agent.

In the centrifugal coating method, the core material is suspended in a liquid coating and the resultant suspension is fed onto a rotating face of a rotating disc. Thus the suspension is sprayed and dried due to the centrifugal force, thereby coating the core material. In this process, appropriate production conditions (rotational speed of the rotating disc, rotating disc temperature, rotating disc size, etc.) may vary depending on the type and particle size of the core material employed, the viscosity of the suspension, the coating material employed, the particle size of the coated powder to be produced, etc. However, it is necessary that the surface temperature of the rotating disc is controlled to the melting point of the lipid in the coating agent or higher and the atmospheric temperature is controlled to the melting point of the lipid or lower.

In the contact/collision coating method, the above-described mixture of the lipid which is solid at ordinary temperature with the edible water-soluble additive and/or the edible polymer substance is dried and ground. Then it is brought into contact and collision with the powdery core material by using a mixing/dispersing type granulator such as a ball mill, a mortar or a mixer to thereby coat the core material. Appropriate operation conditions vary depending on the core material employed, the type and particle size of the core material, the apparatus employed, etc.

The ratio of the coating agent to the core material is not strictly restricted and can be appropriately varied depending on the stability of the core material required for the aimed purpose, the release characteristics of the core material and the like. In general, the coating agent may be used in an amount of from about 0.01 to 10 parts by weight, preferably from about 0.03 to 5 parts by weight, per part by weight of the core material.

The coated powder according to the invention makes it possible to control the release of the core material by varying the coating ratio and the coating composition. Thus, it is widely applicable to various purposes. For example, it can be used in drinks including powdery drinks such as instant coffee, desserts, confectionery, chewing gums, processed foods obtained by kneading such as processed marine products, seasonings, powdery foods such as powdery soups and powdery dessert mixes, powdery food materials such as pancake mix, baked snacks (adding to dough or coating after baking), frozen foods, retort foods and food products for microwave cooking.

The amount of the coated powder according to the invention to be added to these foods for imparting aroma widely varies depending on the type of the coated powder and the type of the food or drink to which the coated powder is added. In general, it is added in an amount of from 0.001 to 0.05 parts by weight, preferably from 0.003 to 0.03 parts by weight, per part by weight of the food or drink.

Now, the invention will be illustrated in greater detail by reference to the following Examples. However, it is to be understood that the invention is not construed as being restricted thereto. Referential Examples 1 and 2 provide examples of the production of the core materials to be used in the Examples. Unless otherwise noted, all percentages are by weight.

### REFERENCE EXAMPLE 1

To 2000 g of water, 500 g of acacia gum and 300 g of dextrin (DE=6 to 10; manufactured by Sanmatsu Co., Ltd.) were added and dissolved at about 70°C. After cooling to about 40°C, 200 g of a menthol flavor (manufactured by Takasago Corporation) was added thereto. The resultant mixture was emulsified by stirring at 7000 rpm for 15 minutes by using a TK Homomixer (manufactured by Tokushu Kika Kogyo Co., Ltd.) while maintaining at about 40°C. The emulsion thus obtained was spray-dried by using a spray dryer (manufactured by APV) at a blowing temperature of about 190°C and an exhaust temperature of about 90°C. Thus 900 g of a menthol-containing powdered flavor was obtained at a yield in terms of solid of 90%.

### REFERENCE EXAMPLE 2

900 g of a butter flavor-containing powdered flavor was obtained at a yield in terms of solid of 90% by the same method as in Referential Example 1 but using 200 g of a butter flavor (manufactured by Takasago International Corporation) as a substitute for the menthol flavor.

### EXAMPLE 1

To 500 g of water, 15 g of gelatin (AP-200, manufactured by Nitta Gelatin Inc.) was added and dissolved at about 60°C. Separately, 5 g of hydrogenated palm oil (SPF1W, manufactured by Fuji Oil Co., Ltd.) was molten by heating to about 60°C and 0.05 g of soybean lecithin (manufactured by Junsei Chemical Co., Ltd.) was added to the molten fat and mixed homogeneously. The molten fat mixture was added to the above-described aqueous gelatin solution and the resultant mixture was stirred at 7000 rpm for 15 minutes by using a TK Homomixer (manufactured by Tokushu Kika Kogyo Co., Ltd.) while maintaining at about 60°C. Next, water was added to thereby compensate for the loss of water due to evaporation during the mixing. Thus 520 g of a coating agent was prepared.

### EXAMPLE 2

400 g of the powdered flavor of Referential Example 1 was fed into a Multiplex Model MP-01 (manufactured by Powrex Corporation). Then it was coated by spray cooling 520 g of the coating agent prepared in Example 1 at a liquid supplying temperature of 60°C, a blowing temperature of 65°C and an exhaust temperature of 35°C while maintaining the flowable state. Thus, 395 g of a coated powdered flavor was obtained at a yield in terms of solid of 94%.

### EXAMPLE 3

8 g of sucrose fatty acid ester (DK Ester F-110, manufactured by Dai-ichi Kogyo Seiyaku Co., Ltd.) was added to 200 g of 95% ethanol and dissolved therein at about 60°C. Further, a solution prepared by dissolving 12 g of methylcellulose (Metolose SM-4, manufactured by Shin-Etsu Chemical Co:, Ltd.) in 300 g of an 80% aqueous solution of ethanol heated to about 60°C was added thereto and stirred. Then 95% ethanol was added thereto to give 520 g of a homogeneous coating.

### EXAMPLE 4

As in Example 2, 400 g of the powdered flavor of Referential Example 1 was fed into a Multiplex Model MP-01 (manufactured by Powrex Corporation). Then it was coated by spray cooling 520 g of the coating agent prepared in Example 3 at a liquid supplying temperature of 60°C, a blowing temperature of 65°C and an exhaust temperature of 40°C while maintaining the flowable state. Thus, 370 g of a coated powdered flavor was obtained at a yield in terms of solid of 88%.

### COMPARATIVE EXAMPLES 1 TO 4

Using the core material of Referential Example 1, coated powdered flavors having 0.05 parts by weight of a coating per part by weight of the core material were obtained by the same method as in Example 2 but using, as a coating agent, gelatin, hydrogenated palm oil, sucrose fatty acid ester and methylcellulose respectively at the concentrations as listed in Table 1 and controlling the blowing temperature as specified in Table 1.

**TABLE 1**

| Comparative Example | Coating agent | | | Blowing temperature (°C) |
|---|---|---|---|---|
| | Material used | Solvent Solvent | Concentration (%) | |
| 1 | gelatin | water | 4 | 70 |
| 2 | hydrogenated palm oil | - | 100 | 22 |
| 3 | methylcellulose | 80% aqueous solution of ethanol | 5 | 65 |
| 4 | sucrose fatty acid ester | 95% aqueous solution of ethanol | 20 | 45 |

### EXAMPLE 5

A chewing gum composition having the following composition was kneaded at about 40°C for 10 minutes, rolled out and then shaped into gum sheets each weighing 3 g:

| | |
|---|---|
| gum base | 20% |
| corn syrup | 14% |
| powdered flavor of Example 1 (as flavor) | 0.5% |
| powdery sugar | the balance. |

### SENSORY EVALUATION 1

The gum sheets prepared in Example 5 were subjected to a sensory evaluation by using 5 skilled panelists. Evaluation was made on the quickness of the aroma release, sustained effect, strength and effect of masking bitterness derived from menthol flavor. By chewing the gum sheets for 5 minutes, the aroma thus expressed was compared with the passage of time and evaluated in the following 5 grades. Table 2 shows the results.
Evaluation criteria:
A: very good.
B: good.
C: moderate.
D: somewhat poor.
E: poor.

### EXAMPLE 6 AND COMPARATIVE EXAMPLES 5 TO 8

Gum sheets of Example 6 and Comparative Examples 5 to 8 were prepared by the same method as in Example 5 but using the powdered flavors of Example 3 and Comparative Examples 1 to 4 as a substitute for the powdered flavor of Example 1.

The gum sheets prepared in Example 6 and Comparative Examples 5 to 8 were evaluated by the same method as in Sensory Evaluation 1. Table 2 shows the results.

**TABLE 2**

| | Example 5 | Example 6 | Comparative Example 5 | Comparative Example 6 | Comparative Example 7 | Comparative Example 8 |
|---|---|---|---|---|---|---|
| Quickness in release | B | C | B | E | D | D |
| Sustained effect | B | B | C | B | C | B |
| Strength | A | B | B | D | C | D |
| Masking of bitterness | D | B | E | B | B | B |
| Total evaluation | A | A | C | D | C | C |

As Table 2 shows, the sample of Example 5 is comparable to the sample of Comparative Example 5 in quickness in release but superior thereto in sustained effect, strength and masking of bitterness. Moreover, the sample of Example 5 is excellent in hygroscopicity and the flavor originating in the coating agent, though not shown in Table 2. On the other hand, it is highly superior to the sample of Comparative Example 6 in quickness of release and strength.

The sample of Example 6 is almost comparable to the sample of Comparative Example 7 in masking of bitterness but superior thereto in quickness in release, sustained effect and strength. Moreover, the sample of Example 6 is excellent in hygroscopicity, though not shown in Table 2. On the other hand, it is superior to the sample of Comparative Example 8 particularly in quickness of release and strength.

### EXAMPLE 7

37.3 g of methylcellulose (METHOCEL A4C, manufactured by Dow Chemical Co.) was added to 200 g of hot water and dispersed therein. Then 650 g of 95% ethanol was slowly added thereto under stirring to thereby dissolve the methylcellulose. Separately, 2.7 g of stearic acid (manufactured by Junsei Chemical Co., Ltd.) was dissolved in 25 g of 95% ethanol at 60°C. These solutions were mixed together and stirred to give a homogeneous mixture. Then 95% ethanol was added to give 915 g of a coating agent.

### EXAMPLE 8

400 g of the powdered flavor of Referential Example 2 was fed into a Multiplex Model MP-01 (manufactured by Powrex Corporation). Then it was coated by spray cooling 915 g of the coating agent prepared in Example 7 at a liquid supplying temperature of 60°C, a blowing temperature of 70°C and an exhaust temperature of 40°C while maintaining the flowable state. Thus, 370 g of a coated powdered flavor was obtained at a yield in terms of solid of 84%.

### COMPARATIVE EXAMPLE 9

405 g of a coated powdered flavor was obtained at a yield in terms of solid of 92% by the same method as in Example 8 but using 400 g of the powdered flavor of Referential Example 2 as the core material, using 40 g of stearic acid (manufactured by Junsei Chemical Co., Ltd.) at a concentration of 100% as the coating agent (i.e., 0.1 part by weight of the coating per part by weight of the core material) and controlling the liquid supplying temperature, the blowing temperature and the exhaust temperature respectively to 80°C, 22°C and 24°C.

### EXAMPLE 9

64 g of corn grains were weighed into a 200 ml beaker. 1.5 g of the powdered flavor of Example 8 employed as a aroma component and 2 g of sodium chloride were added and well mixed with the corn grains. Then 32.5 g of a hydrogenated fat was added. After thoroughly kneading, the mixture was rolled out on a wrap paper sheet for microwave oven, sealed with a heat sealer, and then cooked in a 930 W microwave oven for 2 minutes and 30 seconds.

### SENSORY EVALUATION 2

The popcorn prepared in Example 9 was subjected to a sensory evaluation by using 5 skilled panelists. By comparing the aroma in chewing and swallowing and strength, evaluation was made in the following 5 grades. Table 3 shows the results.
Evaluation criteria:
A: very good.
B: good.
C: moderate.
D: somewhat poor.
E: poor.

### COMPARATIVE EXAMPLES 10 AND 11

Popcorns of Comparative Examples 10 and 11 were prepared by the same method as in Example 9 but using the powdered flavors of Referential Example 2 and Comparative Example 9 as a substitute for the powdered flavor of Example 8.

The popcorn of Comparative Example 10 (prepared by using the powdered flavor of Referential Example 2) and the popcorn of Comparative Example 11 (prepared by using the powdered flavor of Comparative Example 9) were evaluated as in Sensory Evaluation 2. Table 3 shows the results.

**TABLE 3**

| | Example 9 | Comparative Example 10 | Comparative Example 11 |
|---|---|---|---|
| Aroma note | A | D | B |
| Strength | B | B | D |

The sample of Example 9 is almost similar to the sample of Comparative Example 10 in aroma strength but superior thereto in aroma note, which indicates the effect of preventing the deterioration in the flavor due to the microwave cooking. Compared with the sample of Comparative Example 11, the sample of Example 9 is superior in both of aroma note and strength. In particular, it shows a favorable strength, which indicates the effect of improving the release of the flavor.

### EXAMPLE 10

27 g of granulated sugar was added to 80 g of water and dissolved therein at 60°C. Separately, 3 g of sucrose ester (F-110, manufactured by Dai-ichi Kogyo Seiyaku Co., Ltd.) was added to 120 g of 95% ethanol and dissolved therein by heating to about 60°C. These solutions were mixed together by stirring to give a homogeneous mixture. The mixture was dried at 105°C and the solvent was evaporated to dryness. The solid matter thus obtained was ground with a mill to 60-mesh pass. Thus 25 g of a coating agent was obtained at a yield in terms of solid of 83%.

### EXAMPLE 11

20 g of the coating agent prepared in Example 10 and 200 g of a grape juice powder(manufactured by Takasago Corporation) were thoroughly mixed by using a mortar to thereby give 214 g of a coated powder at a yield of 97%.

### ELUTION EVALUATION

The coated powder prepared in Example 11 was added to 100 g of water to give 4 g of the pure core material and stirred at 100 rpm with stirring blades. The elusion ratio was determined by measuring the absorbance at 520 nm of the solution 8 minutes after the initiation of the stirring. Table 4 shows the result.

### COMPARATIVE EXAMPLES 12 AND 13

200 g of a grape juice powder (manufactured by Takasago Corporation) was thoroughly mixed with 20 g of sucrose fatty acid ester (F-110, manufactured by Dai-ichi Kogyo Seiyaku Co., Ltd.) by using a mortar to thereby give 209 g of a coated powder at a yield of 95%.

The coated powder prepared in Comparative Example 12 and an uncoated powder (Comparative Example 13) were subjected to an elution evaluation as in Example 11 and thus the results shown in Table 4 were obtained.

**TABLE 4**

| | Example 11 | Comparative Example 12 | Comparative Example 13 |
|---|---|---|---|
| Elution ratio (%) | 89.8 | 74.8 | 98.9 |

The elution ratio of Example 11 is intermediate between the elution ratios of Comparative Examples 12 and 13, which indicates that the release speed can be controlled by the coating treatment with the use of the coating agent according to the invention.

### EXAMPLE 12

40 g of methylcellulose (Metolose SM-4, manufactured by Shin-Etsu Chemical Co., Ltd.) was added to 250 g of an 80% aqueous solution of ethanol heated to 60°C. Then the obtained solution was mixed with 200 g of palmitic acid (manufactured by Junsei Chemical Co., Ltd.) molten by heating to 80°C by stirring. After adding 95% of ethanol, 490 g of a homogeneous coating agent was obtained.

48 g of a cinnamon powder (manufactured by Takasago Corporation) was added to the coating agent prepared in Example 12 and dispersed therein. Under stirring while maintaining at 80°C, the dispersion was fed onto a spinning disc (obtained from Southwest Research Institute) and solidified as fine granules, thereby giving 190 g of a coated powder at a yield in terms of solid of 72%. In this step, the disc was spun at 5000 rpm.

### COMPARATIVE EXAMPLE 14

200 g of a coated powder was obtained at a yield in terms of solid of 76% by the same method of coating as in Example 13 but using 48 g of a cinnamon powder (manufactured by Takasago Corporation) as the core material and using 240 g of molten palmitic acid as the coating agent.

### EXAMPLE 14

The coated powder prepared in Example 13 was added at a ratio of 1.5% in terms of the pure core material to a dough having the following composition and thus cinnamon flavored cookies were prepared.

| Component | Part by weight |
|---|---|
| soft wheat flour | 150.0 |
| shortening | 135.0 |
| powdery sugar | 127.5 |
| egg albumen | 90.0 |
| sodium chloride | 0.75 |
| water | 22.5 |

### COMPARATIVE EXAMPLE 15

Cookies were prepared by the same method as in Example 13 but using the coated powder prepared in Comparative Example 14.

### SENSORY EVALUATION 3

The cookies prepared in Example 14 and Comparative Example 15 were subjected to a sensory evaluation by using 5 skilled panelists. As a result, the sample of Example 9 showed a stronger flavor and better release of the aroma.

As described above in detail, coated powders which are less hygroscopic, have a high storage stability and a high oxidation stability, are excellent in the release of core materials, controlled release and taste and can be favorably used for imparting or enhancing aroma and flavor in foods and drinks to be processed by heating, for example, foods for microwave cooking and baked foods can be produced by using lipids which are solid at ordinary temperature, edible water-soluble additives and/or edible polymer substances. By using these coated powders in foods for imparting or enhancing aroma and flavor, prepared foods free from the vaporization of aroma and flavor even in cooking by, for example, a microwave oven can be obtained.

While the invention has been described in detail and with reference to specific embodiments thereof, it will be apparent to one skilled in the art that various changes and modifications can be made therein without departing from the scope thereof.

This application is based on Japanese patent application No. 2001-129849 filed April 26, 2001, the entire contents thereof being hereby incorporated by reference.

## Claims

1. A coating agent comprising (a) a lipid which is solid at ordinary temperature, and (b) at least one of an edible water-soluble additive and an edible polymer substance.

2. The coating agent as claimed in claim 1, wherein the lipid which is solid at ordinary temperature is at least one member selected from the group consisting of waxes, hydrogenated fats, fatty acid monoglycerides, propylene glycol, fatty acid esters, sucrose fatty acid esters, fatty acids, higher alcohols, phospholipids, glycolipids, sterols, hydrocarbons and hydrogenated products thereof.

3. The coating agent as claimed in claim 1, wherein the edible water-soluble additive is at least one member selected from the group consisting of monosaccharides, oligosaccharides and sugar alcohols.

4. The coating agent as claimed in claim 1, wherein the edible polymer substance is at least one member selected from the group consisting of natural gums, cellulose derivatives, starches, starch derivatives and proteins.

5. A coated powder which comprises a core material which is solid at ordinary temperature having been coated with a coating agent comprising (a) a lipid which is solid at ordinary temperature, and (b) at least one of an edible water-soluble additive and an edible polymer substance.

6. The coated powder as claimed in claim 5, wherein the core material is a flavor composition, a coloring material, a souring agent, a vitamin, a sweetener, a seasoning, a spice, a functional substance or a mixture thereof.

7. The coated powder as claimed in claim 6, wherein the core material is a flavor composition.

8. A process for producing a coated powder, which comprises dissolving (a) a lipid which is solid at ordinary temperature and (b) at least one of an edible water-soluble additive and an edible polymer substance in a solvent to give a single phase solution, or emulsifying and mixing the above-described lipid in a molten state with an aqueous solution of at least one of the edible water-soluble additive and the edible polymer substance to give an emulsion, and then coating the whole surface of a core material with the solution or the emulsion thus obtained as a coating agent.

9. A food or a drink which comprises a coated powder as claimed in any one of claims 5 to 7.
